# EUROPEAN PATENT APPLICATION

(11) **EP 4 852 130 A1**
(43) Date of publication of application: **09.12.2026**
(21) Application number: 25926993.4
(22) Date of filing: 02.12.2025
(51) Int. Cl.: H01M 10/0585, H01M 10/052, G01B 11/02

(54) **METHOD FOR MANUFACTURING ALL-SOLID-STATE BATTERY AND ALL-SOLID-STATE BATTERY MANUFACTURED THEREBY**

(30) Priority: 25.03.2025 KR 20250038254
(71) Applicant: LG ENERGY SOLUTION, LTD., Seoul 07335 (KR)
(72) Inventor: Kim, Nam Young, Daejeon 34122 (KR); Kim, Seok Jin, Daejeon 34122 (KR)
(74) Representative: BCKIP Part mbB
(86) International application number: PCT/KR2025/020465
(87) International publication number: WO 2026/205689

(57) **Abstract**

Disclosed are an all-solid-state battery manufacturing method including (S1) preparing a positive electrode and a negative electrode, (S2) acquiring external shape information of the positive electrode through an image capturing unit, (S3) preparing a frame configured to wrap around the positive electrode from a plate based on the external shape information, and (S4) coupling the prepared frame to an outer peripheral surface of the positive electrode and an all-solid-state battery manufactured thereby.

## Description

### [Technical Field]

This application claims the benefit of priority to Korean Patent Application No. 10-2025-0038254 filed on March 25, 2025, the disclosure of which is incorporated herein by reference in its entirety.

The present invention relates to an all-solid-state battery manufacturing method and an all-solid-state battery manufactured thereby, and more particularly to an all-solid-state battery manufacturing method capable of minimizing the occurrence of a gap caused by the difference in the width or length between a negative electrode and a positive electrode and an all-solid-state battery manufactured thereby.

### [Background Art]

With technological development of mobile devices and an increase in demand therefor, secondary batteries, which are capable of being charged and discharged, have been used as an energy source for various mobile devices. Secondary batteries have also attracted attention as an energy source for electric vehicles and hybrid electric vehicles presented as alternatives to existing gasoline and diesel vehicles, which use fossil fuels.

Currently commercially available lithium-ion batteries use a liquid electrolyte and have a structure in which a negative electrode and a positive electrode are separated by a separator. If the separator is damaged due to deformation or external impact, therefore, short circuit may occur, leading to risks such as overheating or explosion.

Therefore, all-solid-state batteries using a solid electrolyte instead of the liquid electrolyte have been proposed. All-solid-state batteries have higher safety than lithium-ion batteries using the liquid electrolyte, and battery reliability may be improved since electrolyte leakage is prevented.

However, all-solid-state batteries using the solid electrolyte have the problems that the solid electrolyte has lower ionic conductivity than the liquid electrolyte, exhibits degraded output characteristics especially at low temperatures, has difficulty in forming a uniform contact interface between an electrode and a solid electrolyte membrane, compared to the liquid electrolyte, and has poor contact with an electrode active material, leading to increased resistance.

In order to solve the above problems, an isostatic pressing process is generally performed to achieve interface bonding between the electrode and the solid electrolyte.

In general, for an all-solid-state battery, each unit cell formed by sequentially stacking a negative electrode, a solid electrolyte membrane, and a positive electrode is prepackaged using an aluminum pouch, etc., undergoes an isostatic pressing process, and is unpackaged to determine whether the unit cell is defective. Subsequently, only unit cells determined to be good are selected, stacked again, and finally undergo main packaging.

At this time, during the isostatic pressing process, in which the unit cell is pressed under extremely high pressure, defects such as breakage or bending of the edge of the positive electrode or the negative electrode may occur due to the gap resulting from the difference in width or length between the negative electrode and the positive electrode, whereby the unit cell defect rate is high during the isostatic pressing process.

### (Prior Art Document)

(Patent Document 1) Korean Patent Application Publication No. 10-2024-0052314

### [Disclosure]

### [Technical Problem]

The present invention has been made in view of the above problems, and it is an object of the present invention to provide a mold for manufacturing secondary batteries capable of reducing the defect rate of unit cells during an isostatic pressing process and an all-solid-state secondary battery manufacturing method using the same.

It is another object of the present invention to provide a mold for manufacturing secondary batteries capable of further simplifying an all-solid-state secondary battery manufacturing method and an all-solid-state secondary battery manufacturing method using the same.

### [Technical Solution]

As a technical means for achieving the above objects, an all-solid-state battery manufacturing method according to an embodiment of the present invention includes (S1) preparing a positive electrode (10) and a negative electrode (20), (S2) acquiring external shape information of the positive electrode (10) through an image capturing unit (100), (S3) preparing a frame (31) configured to wrap around the positive electrode (10) from a plate (30) based on the external shape information, and (S4) coupling the prepared frame (31) to an outer peripheral surface of the positive electrode (10).

Also, the all-solid-state battery manufacturing method according to the embodiment of the present invention may further include preparing a plate (30) having area width and length equal to or greater than a width and a length of the negative electrode (20) based on external shape information of the negative electrode (20) prior to step (S3).

Also, in the all-solid-state battery manufacturing method according to the embodiment of the present invention, in step (S3), the plate (30) may be cut to prepare the frame (31).

Also, in the all-solid-state battery manufacturing method according to the embodiment of the present invention, in step (S3), a receiving space (S) corresponding to the shape of the positive electrode (10) may be formed in the frame (31).

Also, in the all-solid-state battery manufacturing method according to the embodiment of the present invention, in step (S4), the positive electrode (10) may be inserted into the receiving space (S) and coupled to the frame (31).

Also, in the all-solid-state battery manufacturing method according to the embodiment of the present invention, in step (S3), the plate (30) may be cut using a laser.

Also, in the all-solid-state battery manufacturing method according to the embodiment of the present invention, the image capturing unit (100) may be a vision camera.

Also, in the all-solid-state battery manufacturing method according to the embodiment of the present invention, the frame (31) may have a thickness corresponding to the thickness of the positive electrode (10).

Also, the all-solid-state battery manufacturing method according to the embodiment of the present invention may further include (S5) stacking the positive electrode (10) with the frame (31) coupled thereto on one surface of a solid electrolyte (40) stacked on one surface of the negative electrode (20) to form a unit cell.

Also, in the all-solid-state battery manufacturing method according to the embodiment of the present invention, the positive electrode (10) with the frame (31) coupled thereto may have an area corresponding to the area of the negative electrode (20).

Also, the all-solid-state battery manufacturing method according to the embodiment of the present invention may further include (S6) isostatically pressing one or more stacked unit cells.

Also, the all-solid-state battery manufacturing method according to the embodiment of the present invention may further include stacking the one or more unit cells prior to step (S6).

Also, in the all-solid-state battery manufacturing method according to the embodiment of the present invention, the plate (30) may be an insulator.

Also, the all-solid-state battery manufacturing method according to the embodiment of the present invention may further include transmitting a signal for cutting the plate (30) based on the external shape information of the positive electrode (10) acquired by the image capturing unit (100) in step (S3).

In addition, an all-solid-state battery according to an embodiment of the present invention is manufactured by the all-solid-state battery manufacturing method according to the embodiment of the present invention.

### [Advantageous Effects]

As is apparent from the above description, in an all-solid-state battery manufacturing method according to the present invention and an all-solid-state battery manufactured thereby, a frame is coupled to an outer peripheral surface of a positive electrode to reduce a gap formed due to the difference in width and length between the positive electrode and a negative electrode, whereby it is possible to uniformly press a unit cell during an isostatic pressing process and to minimize the defect rate due to bending or damage.

Furthermore, in the all-solid-state battery manufacturing method according to the present invention and the all-solid-state battery manufactured thereby, a plate is cut to form a frame based on external shape information of each of the positive electrode and the negative electrode, whereby it is possible to prepare frames corresponding to positive electrodes and negative electrodes of various widths and lengths.

### [Description of Drawings]

FIG. 1 is a flowchart illustrating an all-solid-state battery manufacturing method according to the present invention.
FIG. 2 is a view illustrating the all-solid-state battery manufacturing method according to the present invention, showing that an image capturing unit acquires external shape information of a positive electrode.
FIG. 3 is a view illustrating the all-solid-state battery manufacturing method according to the present invention, showing that the image capturing unit acquires external shape information of a negative electrode.
FIG. 4 is a view illustrating the all-solid-state battery manufacturing method according to the present invention, showing that a plate having the same width and length as the negative electrode is prepared.
FIG. 5 is a view illustrating the all-solid-state battery manufacturing method according to the present invention, showing that a plate having an area greater than the width and length of the negative electrode is prepared.
FIG. 6 is a view illustrating the all-solid-state battery manufacturing method according to the present invention, showing that a frame is prepared from the plate based on the external shape information of each of the positive electrode and the negative electrode.
FIG. 7 is a view illustrating the all-solid-state battery manufacturing method according to the present invention, showing that the frame is coupled to an outer peripheral surface of the positive electrode.
FIG. 8 is a view illustrating the all-solid-state battery manufacturing method according to the present invention, showing that a unit cell is formed.
FIG. 9 is a perspective exploded view of the unit cell shown in FIG. 8.
FIG. 10 is a view illustrating the all-solid-state battery manufacturing method according to the present invention, showing that one or more unit cells are stacked.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations will be omitted when it may obscure the subject matter of the present invention.

In addition, the same reference numbers will be used throughout the drawings to refer to parts that perform similar functions or operations. When one part is said to be connected to another part throughout the specification, not only may the one part be directly connected to the other part, but also, the one part may be indirectly connected to the other part via a further part. In addition, that a predetermined element is included does not mean that other elements are excluded, but means that such elements may be further included unless mentioned otherwise.

Hereinafter, an all-solid-state battery manufacturing method according to the present invention and an all-solid-state battery manufactured thereby will be described.

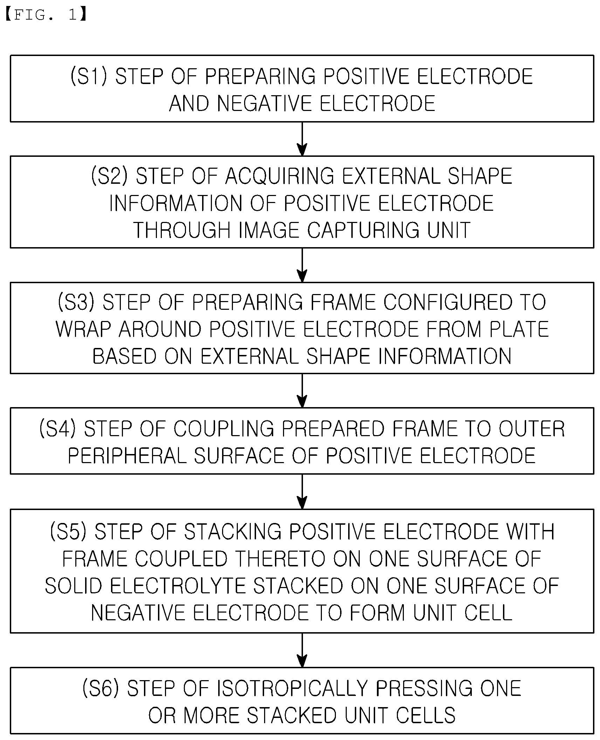

FIG. 1 is a flowchart illustrating an all-solid-state battery manufacturing method according to the present invention.

Referring to FIG. 1, the all-solid-state battery manufacturing method according to the present invention may include (S1) a step of preparing a positive electrode 10 and a negative electrode 20, (S2) a step of acquiring external shape information of the positive electrode 10 through an image capturing unit 100, (S3) a step of preparing a frame 31 configured to wrap around the positive electrode 10 from a plate 30 based on the external shape information, (S4) a step of coupling the prepared frame 31 to an outer peripheral surface of the positive electrode 10, (S5) a step of stacking the positive electrode 10 with the frame 31 coupled thereto on one surface of a solid electrolyte 40 stacked on one surface of the negative electrode 20 to form a unit cell, and (S6) a step of isostatically pressing one or more stacked unit cells.

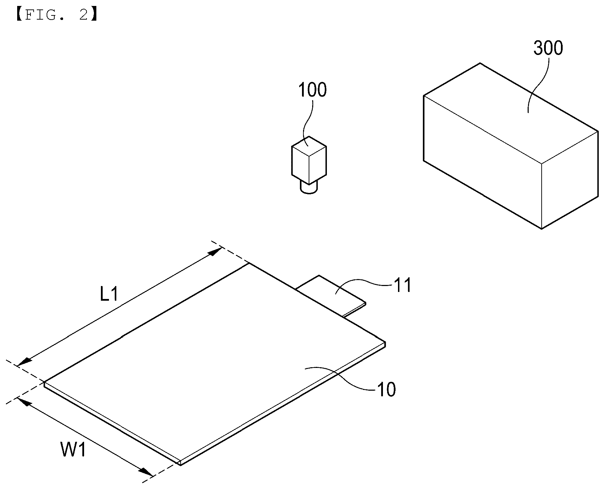

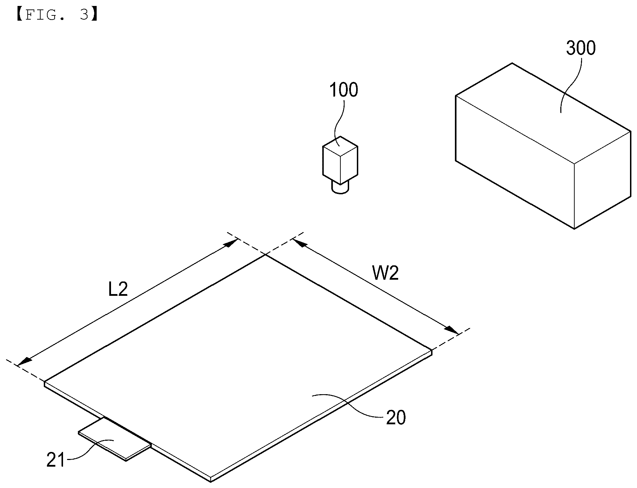

FIG. 2 is a view illustrating the all-solid-state battery manufacturing method according to the present invention, showing that the image capturing unit acquires the external shape information of the positive electrode, and FIG. 3 is a view illustrating the all-solid-state battery manufacturing method according to the present invention, showing that the image capturing unit acquires external shape information of the negative electrode.

First, step (S1) and step (S2) will be described in detail with reference to FIGs. 2 and 3. The positive electrode 10 prepared in step (S1) may have a width W1 and a length L1 less than the width W2 and the length L2 of the negative electrode 20.

The positive electrode includes a positive electrode current collector and a positive electrode active material applied to each of an upper surface and a lower surface of the positive electrode current collector. The positive electrode active material may be mixed with a conductive agent and a binder, and a filler is further added as needed.

In general, the positive electrode current collector may have a thickness of 3 to 500 µm. The positive electrode current collector is not particularly restricted as long as the positive electrode current collector exhibits high conductivity while the positive electrode current collector does not induce any chemical change in a battery to which the positive electrode current collector is applied. For example, the positive electrode current collector may be made of stainless steel, aluminum, nickel, titanium, or sintered carbon. Alternatively, the positive electrode current collector may be made of aluminum or stainless steel, the surface of which is treated with carbon, nickel, titanium, or silver. In addition, the positive electrode current collector may have a micro-scale uneven pattern formed on the surface thereof so as to increase adhesion of the positive electrode active material, or may be configured in any of various forms, such as a film, a sheet, a foil, a net, a porous body, a foam body, and a non-woven fabric body.

A layered compound, such as lithium cobalt oxide (LiCoO₂) or lithium nickel oxide (LiNiO₂), or a compound substituted with one or more transition metals; a lithium manganese oxide represented by the chemical formula Li₁₊ₓMn₂₋ₓO₄ (where x = 0 to 0.33) or a lithium manganese oxide, such as LiMnO₃, LiMn₂O₃, or LiMnO₂; lithium copper oxide (Li₂CuO₂); a vanadium oxide, such as LiV₃O₈, V₂O₅, or Cu₂V₂O₇; a Ni-sited lithium nickel oxide represented by the chemical formula LiNi₁₋ₓMₓO₂ (where M = Co, Mn, Al, Cu, Fe, Mg, B, or Ga, and x = 0.01 to 0.3); a lithium manganese composite oxide represented by the chemical formula LiMn₂₋ₓMₓO₂ (where M = Co, Ni, Fe, Cr, Zn, or Ta, and x = 0.01 to 0.1) or the chemical formula Li₂Mn₃MO₈ (where M = Fe, Co, Ni, Cu, or Zn); LiMn₂O₄ in which a part of Li in the chemical formula is replaced by alkaline earth metal ions; a disulfide compound; or Fe₂(MoO₄)₃ may be used as the positive electrode active material; however, the present invention is not limited thereto.

The negative electrode includes a negative electrode current collector and a negative electrode active material applied to each of an upper surface and a lower surface of the negative electrode current collector. The negative electrode active material may be further mixed with a conductive agent and a binder, and the negative electrode current collector may be coated with the mixture.

The negative electrode current collector is generally manufactured so as to have a thickness of 3 to 500 µm. The negative electrode current collector is not particularly restricted as long as the negative electrode current collector exhibits high conductivity while the negative electrode current collector does not induce any chemical change in a battery to which the negative electrode current collector is applied. For example, the negative electrode current collector may be made of copper, stainless steel, aluminum, nickel, titanium, or sintered carbon. Alternatively, the negative electrode current collector may be made of copper or stainless steel, the surface of which is treated with carbon, nickel, titanium, or silver, or an aluminum-cadmium alloy. Furthermore, in the same manner as the positive electrode current collector, the negative electrode current collector may have a micro-scale uneven pattern formed on the surface thereof in order to increase adhesion of the negative electrode active material, or may be configured in any of various forms, such as a film, a sheet, a foil, a net, a porous body, a foam body, and a non-woven fabric body.

Meanwhile, each of the negative electrode current collector and the positive electrode current collector includes a part to which a slurry mixture including the active material is applied and an uncoated portion, which is a part to which no slurry mixture is applied, wherein the uncoated portion is cut to form an electrode tab, or a separate conductive member is connected to the uncoated portion by ultrasonic welding to form an electrode tab, and electrode tabs are gathered to form a tab bundle.

In step (S2), the image capturing unit 100 may capture an image of the positive electrode 10 to acquire information about the width W1 and the length L1 of the positive electrode 10. In addition, at this time, the image capturing unit 100 may acquire information about the thickness of the positive electrode 10. The image capturing unit 100 may be a vision camera; however, the present invention is not limited thereto, and any of various image capturing units capable of acquiring the external shape information of the positive electrode 10 may be used.

Furthermore, in step (S2), the image capturing unit 100 may capture an image of the negative electrode 20 to acquire information about the width W2 and the length L2 of the negative electrode 20, and may also acquire information about the thickness of the negative electrode 20. The image capturing unit 100 may capture images of the positive electrode 10 and the negative electrode 20 through a single image capturing device to acquire the external shape information of each of the positive electrode 10 and the negative electrode 20. As another example, the image capturing unit may capture images of the positive electrode 10 and the negative electrode 20 using two image capturing devices, respectively, to acquire the external shape information of each of the positive electrode 10 and the negative electrode 20.

The image capturing unit 100 may transmit the information acquired by capturing the images of the positive electrode 10 and the negative electrode 20 to the controller 300, and the controller 300 may prepare a frame 31 configured to wrap around the positive electrode 10 from the plate 30 in step (S3) based on the information acquired in step (S2).

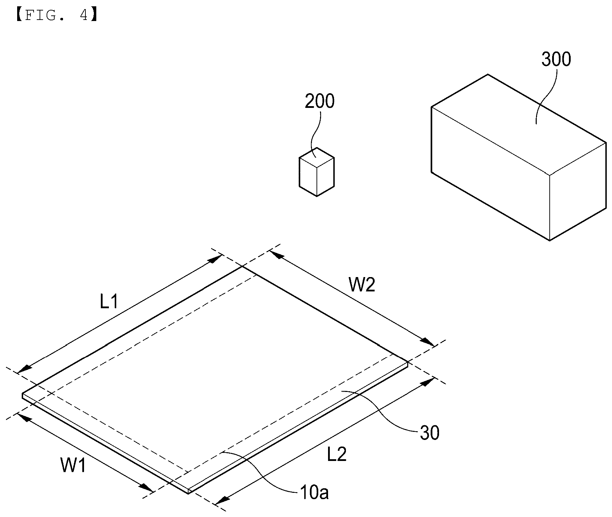

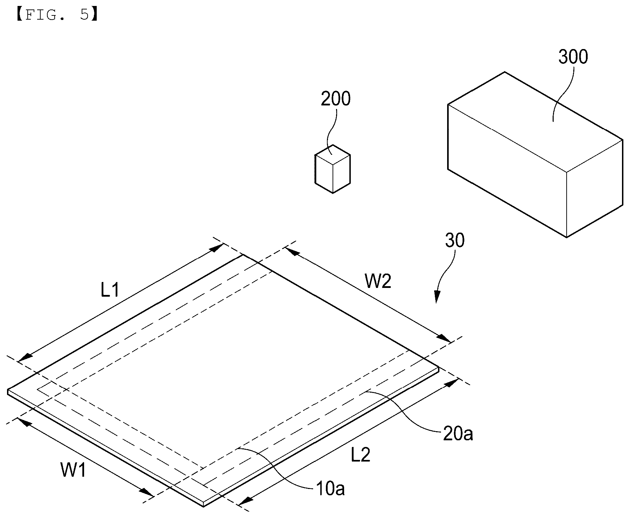

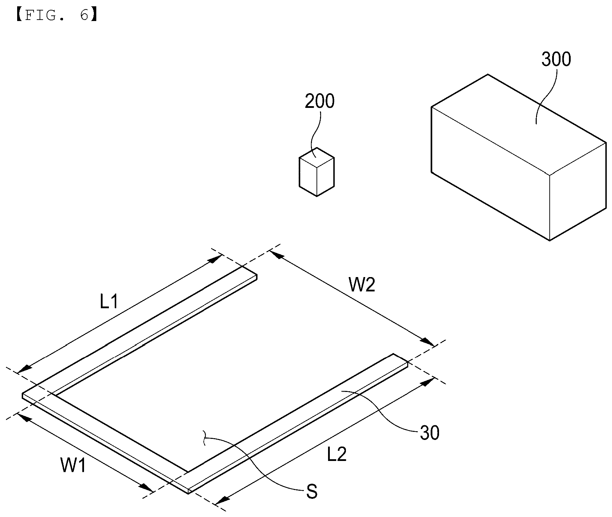

FIG. 4 is a view illustrating the all-solid-state battery manufacturing method according to the present invention, showing that a plate having the same width and length as the negative electrode is prepared, FIG. 5 is a view illustrating the all-solid-state battery manufacturing method according to the present invention, showing that a plate having an area greater than the width and length of the negative electrode is prepared, and FIG. 6 is a view illustrating the all-solid-state battery manufacturing method according to the present invention, showing that a frame is prepared from the plate based on the external shape information of each of the positive electrode and the negative electrode.

Step (S3) will be described in more detail with reference to FIGs. 4 to 6. In step (S3), the controller 300 may transmit a signal such that a cutting unit 200 cuts the plate 30 according to a set shape based on the information about the external shape 10a of the positive electrode acquired by the image capturing unit 100. Here, the set shape may be a shape corresponding to the information about the external shape 10a of the positive electrode, and the set shape may be a shape considering the information about the external shape 20a of the negative electrode as well.

The plate 30 may be prepared prior to step (S3), and the plate 30 may have an area equal to or greater than the width W2 and the length L2 of the negative electrode 20 based on the information about the external shape 20a of the negative electrode. In addition, the plate 30 may have a thickness corresponding to the thickness of the positive electrode 10.

In this case, the plate 30 may be provided as an insulator and, more specifically, may be made of a material, such as polypropylene (PP), liquid silicone rubber (LSR), epoxy, or urethane; however, any pressure-resistant insulating material that does not undergo shape deformation during isostatic pressing may be used without limitation.

In step (S3), the plate 30 may be cut along the shape of the positive electrode 10 by the cutting unit 200 such that a receiving space S corresponding to the shape of the positive electrode 10 acquired in step (S2) is formed, whereby a frame 31 may be prepared.

For example, in step (S3), the cutting unit 200 may cut the plate 30 such that a receiving space S corresponding to the width W1 and the length L1 of the positive electrode 10 is formed based on the information about the width W1 and the length L1 of the positive electrode 10 acquired in step (S2).

At this time, the receiving space S may be formed such that at least a part of the edge of the frame 31 is open to allow a positive electrode tab portion 11 of the positive electrode 10 to protrude from the edge of the frame 31. For example, the receiving space S may be formed as a space that has a width corresponding to the positive electrode tab portion 11 in the middle of the edge of one side of the frame 31 such that the positive electrode tab portion 11 protrudes from the edge of one side of the frame 31 and that corresponds to the width W1 and the length L1 of the positive electrode 10 in the middle of the frame 31.

In addition, in another example, the receiving space S may have a width corresponding to the width W1 of the positive electrode 10 at the edge of one side of the frame 31, and the width may extend to the other side by the length L1 of the positive electrode 10.

Furthermore, in step (S3), the plate 30 may be cut along the shape of the negative electrode 20 by the cutting unit 200 so as to have an external shape corresponding to the shape of the negative electrode 20 acquired in step (S2), whereby a frame 31 may be prepared. For example, in step (S3), the cutting unit may cut the plate 30 such that the external shape of the plate 30 has the width W2 and the length L2 of the negative electrode 20 based on the information about the width W2 and the length L2 of the negative electrode 20 acquired in step (S2). Here, the length L2 of the negative electrode 20 may be the length L2 of the negative electrode 20 excluding a negative electrode tab portion 21.

The cutting unit 200 may be provided as a laser unit configured to apply a laser. As another example, the cutting unit 200 may be provided as a knife unit having a sharp edge.

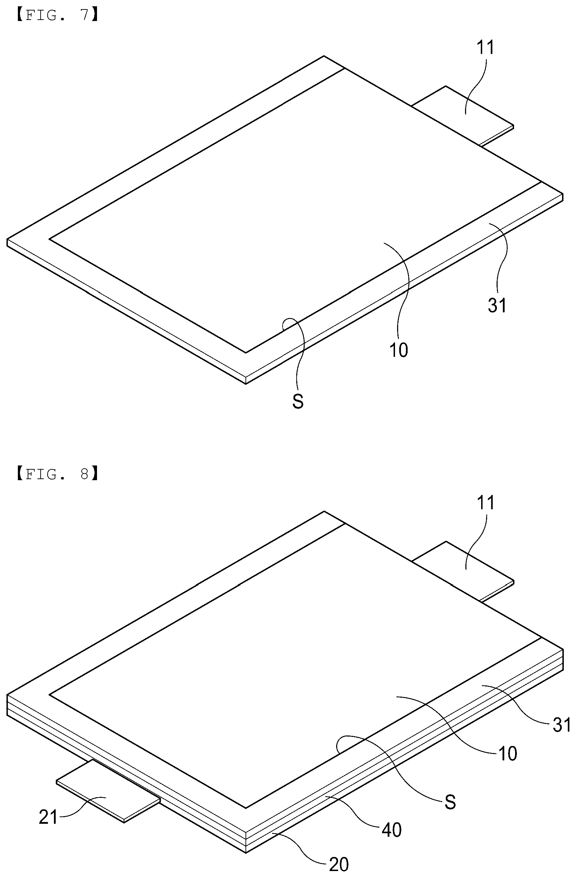

FIG. 7 is a view illustrating the all-solid-state battery manufacturing method according to the present invention, showing that the frame is coupled to the outer peripheral surface of the positive electrode.

Step (S4) will be described with reference to FIG. 7. The frame 31 prepared in step (S3) may be coupled to the outer peripheral surface of the positive electrode 10. More specifically, in step (S3), a receiving space S corresponding to the positive electrode 10 is formed in the frame 31, and in step (S4), the positive electrode 10 may be inserted into the receiving space S of the frame 31 and coupled to the frame 31.

At this time, as described above, when the positive electrode 10 is inserted into the receiving space S of the frame 31, the positive electrode may be inserted and coupled in the state in which the positive electrode tab portion 11 is disposed so as to protrude from the edge of one side of the frame 31.

Furthermore, in step (S3), the positive electrode may have a width W2 and a length L2 corresponding to the width and the length of the negative electrode 20. Accordingly, the positive electrode 10 coupled to the frame 31 may have a width W2 and length L2 corresponding to the width and the length of the negative electrode 20, whereby the positive electrode may have an area corresponding to the area of the negative electrode 20.

In addition, the frame 31 may have a thickness corresponding to the thickness of the positive electrode 10, whereby it is possible to prevent short circuit due to the thickness difference between the frame 31 and the positive electrode 10 and the occurrence of a gap between the positive electrode 10 and the negative electrode 20.

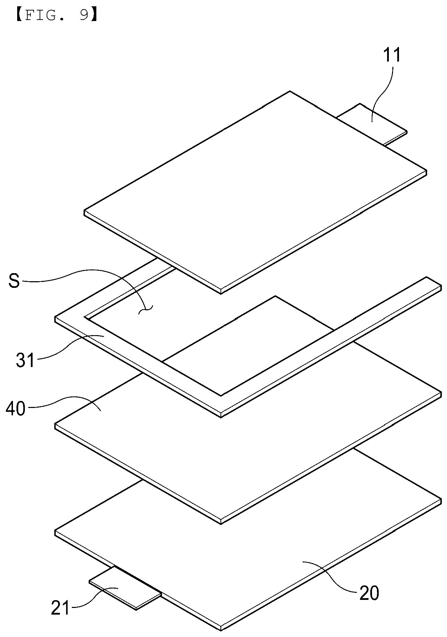

FIG. 8 is a view illustrating the all-solid-state battery manufacturing method according to the present invention, showing that a unit cell is formed, and FIG. 9 is an exploded perspective view of the unit cell shown in FIG. 8.

Step (S5) will be described with reference to FIGs. 8 and 9. In step (S5), the positive electrode 10 coupled to the frame 31 in step (S4) may be stacked on one surface of a solid electrolyte 40 stacked on one surface of the negative electrode 20 to form a unit cell. In other words, in step (S5), the negative electrode 20, the solid electrolyte 40, and the positive electrode 10 with the frame 31 coupled thereto may be sequentially stacked on one side to form a unit cell.

Here, the solid electrolyte 40 may be a solid electrolyte made of a polymer-based, sulfide-based, or oxide-based material. As another example, a composite solid electrolyte in which polymer and ceramic are mixed with each other may be used.

Furthermore, in step (S5), when the unit cell is formed, the positive electrode 10 with the frame 31 coupled thereto and the negative electrode 20 may be disposed such that the tab portions 11 and 21 are located in opposite directions; however, the present invention is not limited thereto. The positive electrode and the negative electrode may be disposed such that the tab portions thereof are located in the same direction.

The unit cell may be a monocell, an A-type bicell, a C-type bicell, or a half-cell, but may encompass various other unmentioned cells. As described above, the unit cell may be a monocell in which a negative electrode 20, a solid electrolyte 40, and a positive electrode 10 with a frame 31 coupled thereto are sequentially stacked.

As another example, the unit cell may be an A-type bicell in which a positive electrode 10, a solid electrolyte 40, a negative electrode 20, a solid electrolyte 40, and a positive electrode 10 are sequentially stacked from top to bottom.

As another example, the unit cell may be a C-type bicell in which a negative electrode 20, a solid electrolyte 40, a positive electrode 10, a solid electrolyte 40, and a negative electrode 20 are sequentially stacked from top to bottom.

As another example, the unit cell may be a half-cell in which a negative electrode 20 or a positive electrode 10 is interposed between a pair of solid electrolytes 40, i.e., a solid electrolyte 40, a negative electrode 20, and a solid electrolyte 40 are sequentially stacked from top to bottom or a solid electrolyte 40, a positive electrode 10, and a solid electrolyte 40 are sequentially stacked from top to bottom.

The negative electrode 20, the solid electrolyte 40, and the positive electrode 10 constituting the A-type bicell, the C-type bicell, or the half-cell are the same as the negative electrode 20, the solid electrolyte 40, and the positive electrode 10 described above, and the positive electrode 10 is coupled to the frame 31. Consequently, redundant descriptions thereof will be omitted.

Meanwhile, the unit cell is not limited to the aforementioned forms, and may include a stack structure in which a negative electrode 20, a solid electrolyte 40, a positive electrode 10 with a frame 31 coupled thereto, a solid electrolyte 40, a negative electrode 20, a solid electrolyte 40, a positive electrode 10 with a frame 31 coupled thereto, and a negative electrode 20 are sequentially stacked or this configuration is stacked repeatedly.

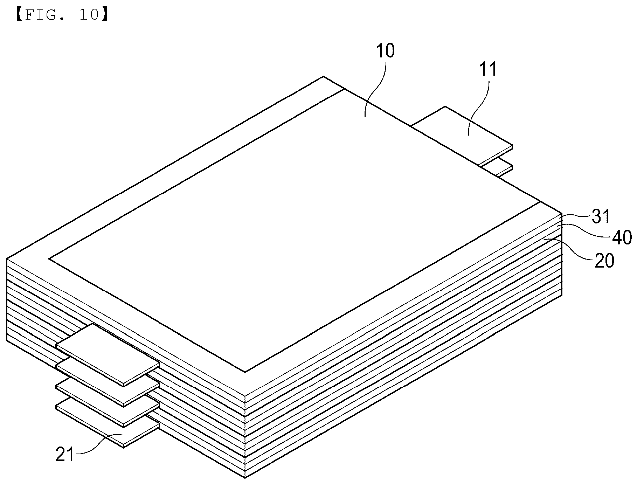

FIG. 10 is a view illustrating the all-solid-state battery manufacturing method according to the present invention, showing that one or more unit cells are stacked.

Referring to FIG. 10, in step (S6), one or more unit cells formed in step (S5) may be isostatically pressed in a stacked state. At this time, in order to isostatically press the one or more stacked unit cells in step (S6), a step of stacking one or more unit cells formed in step (S5) may be further performed prior to step (S6).

Isostatic pressing may be performed using a warm isostatic pressing (WIP) method. For example, warm isostatic pressing (WIP) may be performed at a temperature of 45°C to 100°C to ensure good interface contact between electrodes through molding of the solid electrolyte while maintaining the electrode constituent materials within an appropriate temperature range within which the electrode constituent materials are thermally stable.

For example, isostatic pressing may be performed at a pressing pressure of 4,000 bar to 7,000 bar, and preferably at a pressing pressure of about 5,000 bar.

Isostatic pressing performed in step (S6) is not limited thereto, and may be performed using a hot isostatic pressing (HIP) method or a cold isostatic pressing (CIP) method.

The frame 31 is disposed in the gap formed due to the difference in width and length between the negative electrode 20 and the positive electrode 10. During the isostatic pressing process in step (S6), therefore, it is possible to uniformly press the unit cell and to prevent bending of or damage to the edge of the electrode caused by the gap, thereby minimizing the unit cell defect rate.

Although the method of isostatically pressing the plurality of stacked unit cells has been described with reference to FIG. 10, it is also possible to isostatically press each unit cell before stacking. That is, the unit cell shown in FIG. 8, in which the negative electrode, the solid electrolyte, and the positive electrode are sequentially stacked, may be isostatically pressed.

Meanwhile, the controller 300 may not only adjust the cutting unit 200 based on the external shape information of the positive electrode 10 and/or the negative electrode 20 acquired by the image capturing unit 100, but may also perform overall control to ensure that the image capturing unit 100 and the cutting unit 200 according to the present invention function properly.

The controller 300 may be implemented in the form of hardware, may be implemented in the form of software, or may be implemented in the form of a combination of hardware and software. The controller may be implemented in the form of a computing device (an arithmetic device) such as a microprocessor, but is not limited thereto, and may be implemented in any of various forms that are obvious to those skilled in the art.

In addition, the controller 300 may determine the information acquired by the image capturing unit 100 in real time and transmit an abnormality signal of the positive electrode 10 and/or the negative electrode 20 to an operator. The signal may be displayed on an equipment monitor (e.g., a display) or transmitted to an operator's terminal (e.g., a mobile phone).

An all-solid-state battery manufactured by the all-solid-state battery manufacturing method according to the embodiment of the present invention will be described.

Referring to FIGs. 8 to 10, the all-solid-state battery may include a unit cell configured such that a negative electrode 20, a solid electrolyte 40, and a positive electrode 10 with a frame 31 coupled thereto are sequentially stacked and a battery case (not shown). One or more unit cells may be received in the battery case in a stacked state.

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and the technical idea of the present invention, and it will be obvious that such changes and modifications fall within the scope of the appended claims.

### (Description of Reference Symbols)

10: Positive electrode 10a: External shape of positive electrode
11: Positive electrode tab portion
20: Negative electrode 20a: External shape of negative electrode
21: Negative electrode tab portion
30: Plate 31: Frame
40: Solid electrolyte
100: Image capturing unit
200: Cutting unit
300: Controller
S: Receiving space

## Claims

1. An all-solid-state battery manufacturing method comprising:
(S1) preparing a positive electrode and a negative electrode;
(S2) acquiring external shape information of the positive electrode through an image capturing unit;
(S3) preparing a frame (31) configured to wrap around the positive electrode from a plate based on the external shape information; and
(S4) coupling the prepared frame to an outer peripheral surface of the positive electrode.

2. The all-solid-state battery manufacturing method according to claim 1, further comprising preparing a plate having area width and length equal to or greater than a width and a length of the negative electrode based on external shape information of the negative electrode prior to step (S3).

3. The all-solid-state battery manufacturing method according to claim 2, wherein, in step (S3), the plate is cut to prepare the frame.

4. The all-solid-state battery manufacturing method according to claim 3, wherein, in step (S3), a receiving space corresponding to the shape of the positive electrode is formed in the frame.

5. The all-solid-state battery manufacturing method according to claim 4, wherein, in step (S4), the positive electrode is inserted into the receiving space and coupled to the frame.

6. The all-solid-state battery manufacturing method according to claim 3, wherein, in step (S3), the plate is cut using a laser.

7. The all-solid-state battery manufacturing method according to claim 2, wherein the image capturing unit is a vision camera.

8. The all-solid-state battery manufacturing method according to claim 2, wherein the frame has a thickness corresponding to a thickness of the positive electrode.

9. The all-solid-state battery manufacturing method according to claim 2, further comprising (S5) stacking the positive electrode with the frame coupled thereto on one surface of a solid electrolyte stacked on one surface of the negative electrode to form a unit cell.

10. The all-solid-state battery manufacturing method according to claim 9, wherein the positive electrode with the frame coupled thereto has an area corresponding to an area of the negative electrode.

11. The all-solid-state battery manufacturing method according to claim 9, further comprising (S6) isostatically pressing one or more stacked unit cells.

12. The all-solid-state battery manufacturing method according to claim 11, further comprising stacking the one or more unit cells prior to step (S6).

13. The all-solid-state battery manufacturing method according to claim 2, wherein the plate is an insulator.

14. The all-solid-state battery manufacturing method according to claim 3, further comprising transmitting a signal for cutting the plate based on the external shape information of the positive electrode acquired by the image capturing unit in step (S3).

15. An all-solid-state battery manufactured by the all-solid-state battery manufacturing method according to any one of claims 1 to 14.
